(19) Europäisches Patentamt
European Patent Office
Office européen des brevets

(11) **EP 4 539 169 A1**

(12) **EUROPEAN PATENT APPLICATION**
published in accordance with Art. 153(4) EPC

(43) Date of publication:
**16.04.2025 Bulletin 2025/16**

(21) Application number: **23842979.9**

(22) Date of filing: **18.07.2023**

(51) International Patent Classification (IPC):
**H01M 4/62** (2006.01)     **H01M 4/139** (2010.01)

(52) Cooperative Patent Classification (CPC):
**H01M 4/139; H01M 4/62;** Y02E 60/10

(86) International application number:
**PCT/JP2023/026304**

(87) International publication number:
**WO 2024/019056 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022   JP 2022115668**

(71) Applicant: **Harima Chemicals, Incorporated
Kakogawa-shi, Hyogo 675-0019 (JP)**

(72) Inventors:
• **HORII Tadaaki
  Kakogawa-shi, Hyogo 675-0019 (JP)**
• **INOUE Naoya
  Kakogawa-shi, Hyogo 675-0019 (JP)**
• **KURIHARA Takanori
  Kakogawa-shi, Hyogo 675-0019 (JP)**
• **NAKAMURA Ichiro
  Kakogawa-shi, Hyogo 675-0019 (JP)**

(74) Representative: **advotec.
Patent- und Rechtsanwaltspartnerschaft
Tappe mbB
Widenmayerstraße 4
80538 München (DE)**

(54) **BINDER COMPOSITION FOR LITHIUM ION BATTERY ELECTRODES**

(57)    The binder composition for lithium ion battery electrodes at least contains a poly(meth)acrylamide copolymer that is a polymer of a monomer component including a (meth)acrylamide monomer and an unsaturated carboxylic acid-containing monomer as monomer units. The monomer component includes 30 mol% to 80 mol% of the (meth)acrylamide monomer and 20 mol% to 70 mol% of the unsaturated carboxylic acid-containing monomer relative to 100 mol% of a total amount of the monomer component. The poly(meth)acrylamide copolymer has an intrinsic viscosity of 3.5 dL/g to 7.5 dL/g.

**EP 4 539 169 A1**

**Description**

TECHNICAL FIELD

The present invention relates to a binder composition for lithium ion battery electrodes.

BACKGROUND ART

In recent years, studies on improvement of electrode materials have been actively conducted with the aim of further enhancing the performance of lithium ion batteries. In general, an electrode of a lithium ion battery is formed by applying a slurry composition containing a powdery electrode active material and a binder composition for dispersing the electrode active material in a solvent and adhering the electrode active material to a current collector, to the current collector and drying the slurry composition.

Binder resins such as polyvinylidene fluoride (PVDF) and styrene-butadiene rubber (SBR)/carboxymethyl cellulose (CMC) have been widely used as such a binder composition. However, with the improvement in performance of lithium ion batteries, a binder having a higher adhesive force than these binder resins is desired.

Further, a binder composition containing a water-soluble polymer which contains a (meth)acrylamide monomer and an acid group-containing monomer has been proposed, in which the content percentage of the acid group-containing monomer unit in the water-soluble polymer is from 5 mass% to 70 mass% inclusive, and the percentage of a water-soluble polymer having a radius of gyration of 200 nm or less in the water-soluble polymer is from 95 mass% to 100 mass% inclusive. Patent Document 1 indicates that the use of such a binder composition improves low-temperature characteristics of non-aqueous secondary batteries (e.g., see Patent Document 1).

CITATION LIST

PATENT DOCUMENT

Patent Document 1: International Patent Publication No. WO 2017/163806

SUMMARY OF THE INVENTION

TECHNICAL PROBLEM

However, the binder composition described in Patent Document 1 has a problem that the slurry composition containing the binder composition has insufficient sedimentation stability and aggregation occurs in the slurry composition, resulting in poor coatability of the slurry composition.

The present invention was made in view of the above-mentioned problems, and is intended to provide a binder composition for a lithium ion battery electrode, capable of obtaining a slurry composition for a lithium ion battery electrode, having excellent sedimentation stability and coatability, and capable of obtaining an electrode for a lithium ion battery electrode, having excellent adhesion of an electrode mixture layer to a current collector.

SOLUTION TO THE PROBLEM

In order to achieve the aforementioned object, a binder composition for a lithium ion battery electrode according to the present invention at least contains a poly(meth)acrylamide copolymer that is a polymer of a monomer component including a (meth)acrylamide monomer and an unsaturated carboxylic acid-containing monomer as monomer units. The monomer component includes 30 mol% to 80 mol% of the (meth)acrylamide monomer and 20 mol% to 70 mol% of the unsaturated carboxylic acid-containing monomer relative to 100 mol% of a total amount of the monomer component, and the poly(meth)acrylamide copolymer has an intrinsic viscosity of 3.5 dL/g to 7.5 dL/g.

ADVANTAGES OF THE INVENTION

The binder composition for a lithium ion battery electrode according to the present invention can provide a slurry composition for a lithium ion battery electrode, having excellent sedimentation stability and coatability, and can provide a lithium ion battery electrode having excellent adhesion of an electrode mixture layer to a current collector.

DESCRIPTION OF EMBODIMENT

The binder composition for a lithium ion battery electrode according to the present invention will be described below.

The binder composition for a lithium ion battery electrode of the present invention at least contains a poly(meth)acrylamide copolymer that is a polymer of a monomer component including a (meth)acrylamide monomer and an unsaturated carboxylic acid-containing monomer as monomer units.

<(Meth)Acrylamide Monomer>

The (meth)acrylamide monomer forming the (meth)acrylamide monomer unit is a monomer derived from a (meth)acrylamide group-containing compound, and examples of the (meth)acrylamide monomer include acrylamide and methacrylamide. The (meth)acrylamide monomers may be used alone or in combination of two or more.

The term "(meth)acryl" as used herein is defined as acryl and/or methacryl.

The content of the (meth)acrylamide monomer relative to 100 mol% of the total amount of the monomer component (i.e., the (meth)acrylamide monomer, the unsaturated carboxylic acid-containing monomer, and other polymerizable monomers to be described later) is 30 mol% to 80 mol%.

This is because of the following. It is presumed that if the content is less than 30 mol%, hydrophilicity of the poly(meth)acrylamide copolymer becomes high, and dispersibility of a hydrophobic active material becomes insufficient. Thus, a large amount of sedimentation occurs in the slurry composition, which may result in a decrease in sedimentation stability. It is also presumed that if the content is more than 80 mol%, spreading of the poly(meth)acrylamide copolymer caused by charge repulsion becomes insufficient, the poly(meth)acrylamide copolymer does not act as steric hindrance, and the active material aggregates. Thus, a large amount of sedimentation occurs in the slurry composition, sedimentation stability decreases, and spreading of the poly(meth)acrylamide copolymer caused by the charge repulsion becomes insufficient. Further, the number of substituents which can contribute to adhesion is reduced, which may result in decrease of adhesion (adhesion strength) of the electrode mixture layer to the current collector.

The content of the (meth)acrylamide monomer unit relative to 100 mol% of the total amount of the monomer component is preferably 40 mol% to 80 mol%, and more preferably 45 mol% to 75 mol% in view of improving adhesion of the electrode mixture layer to the current collector.

<Unsaturated Carboxylic Acid Group-Containing Monomer>

The unsaturated carboxylic acid-containing monomer forming the unsaturated carboxylic acid-containing monomer unit is an anionic polymerizable monomer derived from unsaturated carboxylic acid or a salt thereof. Examples of the unsaturated carboxylic acid-containing monomer include $\alpha,\beta$-unsaturated monocarboxylic acid-based monomers such as acrylic acid, methacrylic acid, and crotonic acid and $\alpha,\beta$-unsaturated dicarboxylic acid-based monomers such as maleic acid, fumaric acid, itaconic acid, and citraconic acid. Examples of the salt of the unsaturated carboxylic acid include, for example, a sodium salt, a potassium salt, a lithium salt, and an ammonium salt of the unsaturated carboxylic acid. The unsaturated carboxylic acid-containing monomers may be used alone or in combination of two or more. The unsaturated carboxylic acid-containing monomer is preferably $\alpha,\beta$-unsaturated monocarboxylic acid-based monomer, more preferably acrylic acid or methacrylic acid.

The content of the unsaturated carboxylic acid-containing monomer relative to 100 mol% of the total amount of the monomer component is 20 mol% to 70 mol%. This is because of the following. It is presumed that if the content is less than 20 mol%, spreading of the poly(meth)acrylamide copolymer caused by charge repulsion becomes insufficient, the poly(meth)acrylamide copolymer does not act as steric hindrance, and the active material aggregates. Thus, a large amount of sedimentation occurs in the slurry composition, sedimentation stability decreases, and spreading of the poly(meth)acrylamide copolymer caused by the charge repulsion becomes insufficient. Further, the number of substituents which can contribute to adhesion is reduced, which may result in decrease of adhesion (adhesion strength) of the electrode mixture layer to the current collector. It is also presumed that if the content is more than 70 mol%, hydrophilicity of the poly(meth)acrylamide copolymer becomes high, and dispersibility of a hydrophobic active material becomes insufficient. Thus, a large amount of sedimentation occurs in the slurry composition, which may result in a decrease in sedimentation stability.

The content of the unsaturated carboxylic acid-containing monomer relative to 100 mol% of the total amount of the monomer component is preferably 20 mol% to 60 mol%, and more preferably 25 mol% to 55 mol% in view of improving adhesion of the electrode mixture layer to the current collector.

In the present invention, the poly(meth)acrylamide copolymer may further contain other polymerizable monomers as an optional component in addition to the (meth)acrylamide monomer and the unsaturated carboxylic acid-containing monomer. Examples of the other polymerizable monomers include, for example, a nonionic polymerizable monomer, a cross-linkable monomer, and an anionic polymerizable monomer (excluding an unsaturated carboxylic acid-containing monomer).

<Nonionic Polymerizable Monomer>

Examples of the nonionic polymerizable monomer include, for example, styrene, $\alpha$-methylstyrene, (meth) acrylonitrile, alkyl (meth)acrylate, hydroxyalkyl(meth)acrylate, diacetoneacrylamide, polyalkylene glycol (meth)acrylate, glycerol mono(meth)acrylate, vinylpyrrolidone, vinyloxazoline, vinyl acetate, and acryloylmorpholine. The nonionic polymerizable monomers may be used alone or in combination of two or more.

Examples of the alkyl (meth)acrylate include, for example, (meth)acrylate monomers of linear, branched, or cyclic C1 to C30 alkyls such as methyl (meth)acrylate, ethyl (meth)acrylate, n-propyl (meth)acrylate, isopropyl (meth) acrylate, n-butyl (meth)acrylate, isobutyl (meth)acrylate, sec-butyl (meth)acrylate, t-butyl (meth)acrylate, pentyl (meth) acrylate, neopentyl (meth)acrylate, isoamyl (meth)acrylate, hexyl (meth)acrylate, heptyl (meth)acrylate, octyl (meth) acrylate, isooctyl (meth)acrylate, 2-ethylhexyl (meth)acrylate, nonyl (meth)acrylate, isononyl (meth)acrylate, decyl (meth) acrylate, dodecyl (meth)acrylate, tridecyl (meth)acrylate, tetradecyl (meth)acrylate, 1-methyltridecyl (meth)acrylate, hexadecyl (meth)acrylate, octadecyl (meth)acrylate (stearyl (meth)acrylate), isostearyl (meth)acrylate, eicosyl (meth) acrylate, docosyl (meth)acrylate, behenyl (meth)acrylate, tetracosyl (meth)acrylate, triacontyl (meth)acrylate, and cyclohexyl (meth)acrylate.

If the poly (meth)acrylamide copolymer contains the nonionic polymerizable monomer, the content of the nonionic polymerizable monomer relative to 100 mol% of the total amount of the monomer component is preferably 1 mol% to 40 mol%, more preferably 1 mol% to 30 mol%.

<Cross-linkable Monomer>

Examples of the cross-linkable monomer include amido group-containing cross-linkable monomers (e.g., a methylene bis(meth)acrylamide, ethylene bis(meth)acrylamide, aryl (meth)acrylamide, hydroxyethyl acrylamide), N-substituted acrylamide-based monomers (e.g., N,N-dimethylacrylamide, N,N-diethylacrylamide, N-methylol acrylamide, diacetoneacrylamide, and isopropylacrylamide), 1,3,5-triacryloylhexahydro-s-triazine, imido group-containing cross-linkable monomers (e.g., diacryloimide), nitrogen-free bifunctional cross-linking agents (e.g., divinylbenzene, ethylene glycol di(meth)acrylate, diethylene glycol di(meth)acrylate, triethylene glycol di(meth)acrylate, allyl (meth)acrylate), and nitrogen-free polyfunctional cross-linking agents (e.g., pentaerythritol triacrylate, trimethylol propane acrylate, and tetraallyloxyethane). The cross-linkable monomers may be used alone or in combination of two or more.

If the poly (meth)acrylamide copolymer contains a cross-linkable monomer, the content of the cross-linkable monomer relative to 100 mol% of the total amount of the monomer component is preferably 0.01 mol% to 10 mol%, more preferably 0.01 mol% to 5 mol%, yet more preferably 0.01 mol% to 2 mol%.

<Anionic Polymerizable Monomer>

Examples of the anionic polymerizable monomer include, for example, vinyl group-containing sulfonic acid-based monomers such as vinyl sulfonic acid, styrene sulfonic acid, and 2-acrylamide-2-methylpropane sulfonic acid. Examples of the anionic polymerizable monomer further include salts such as a sodium salt, a potassium salt, a lithium salt, and an ammonium salt of the vinyl group-containing sulfonic acid-based monomers.

The anionic polymerizable monomer can be mixed as needed to the extent that it does not interfere with the effects of the present invention.

In addition to the nonionic polymerizable monomer, the cross-linkable monomer, and the anionic polymerizable monomer, a cationic polymerizable monomer may be mixed to the extent that it does not interfere with the effects of the present invention. Examples of the cationic polymerizable monomer include, for example, a tertiary amino-based polymerizable monomer and a quaternary ammonium-based polymerizable monomer.

Examples of the tertiary amino-based polymerizable monomer include tertiary amino group-containing polymerizable monomers (non-quaternary compounds) such as a tertiary amino group-containing (meth)acrylate ester derivative and a tertiary amino group-containing (meth)acrylamide derivative. Examples of the tertiary amino group-containing (meth)acrylate ester derivative include, for example, dialkylaminoethyl (meth)acrylate (e.g., dimethylaminoethyl (meth)acrylate) and dialkylaminopropyl (meth)acrylate. Examples of the tertiary amino group-containing (meth) acrylamide derivative include, for example, dialkylaminoalkyl (meth)acrylamide (e.g., dialkylaminopropyl (meth)acrylamide (e.g., dimethlaminopropyl acrylamide) and (meth)acrylamide-3-methylbutyl dimethylamine).

Examples of the quaternary ammonium-based polymerizable monomer include cationic copolymerizable monomers containing a quaternary ammonium group and having an ethylenic double bond, such as a quaternary compound of the tertiary amino-based polymerizable monomer. Examples of the quaternary compound of the tertiary amino-based polymerizable monomer include, for example, quaternary compounds (quaternary salts) obtained by quaternizing the tertiary amino group of the tertiary amino-based polymerizable monomer with methyl chrloride(methyl chrloride), methyl bromide, benzyl chloride(benzyl chloride), benzyl bromide, dimethyl sulfate, or epichlorohydrin.

<Method for Producing Poly(meth)acrylamide Copolymer>

Next, an example of a method for producing a poly(meth)acrylamide copolymer according to the present invention will be described in detail below.

**In** production of the poly(meth)acrylamide copolymer, a monomer component including the (meth)acrylamide monomer, the unsaturated carboxylic acid-containing monomer, and other monomers is copolymerized. For the copolymerization of the monomer component, for example, the monomer component, a polymerization initiator, and a solvent are charged into a predetermined reaction vessel and reacted. **In** this method, the monomer component may be charged at once, or may be charged dividedly in a plurality of times. The reaction can also proceed while part or all of the polymerization initiator is dropped into the reaction vessel.

Examples of the polymerization initiator include a radical polymerization initiator, and to be specific, peroxide-based compounds, sulfides, sulfines, and sulfinic acids, for example. The polymerization initiator is more preferably a peroxide-based compound. The peroxide-based compound can be used as a redox-based polymerization initiator in combination with a reductant. These polymerization initiators may be used alone or in combination of two or more.

The peroxide-based compound can be, for example, organic peroxide or inorganic peroxide, and is preferably inorganic peroxide.

Examples of the organic peroxide include, for example, benzoyl peroxide, lauroyl peroxide, acetyl peroxide, caprylyl peroxide, 2,4-dichlorobenzoyl peroxide, isobutyl peroxide, acetylcyclohexylsulfonyl peroxide, t-butyl peroxy pivalate, t-butyl peroxy-2-ethylhexanoate, 1,1-di-t-butylperoxy cyclohexane, 1,1-di-t-butylperoxy-3,3,5-trimethyl cyclohexane, 1,1-di-t-hexylperoxy-3,3,5-trimethyl cyclohexane, isopropylperoxy dicarbonate, isobutylperoxy dicarbonate, s-butylperoxy dicarbonate, n-butylperoxy dicarbonate, 2-ethylhexylperoxy dicarbonate, bis(4-t-butylcyclohexyl) peroxy dicarbonate, t-amylperoxy-2-ethylhexanoate, 1,1,3,3-tetramethylbutylperoxy-ethylhexanoate, 1,1,2-trimethylpropyl peroxy-2-ethylhexanoate, t-butyl peroxy isopropyl monocarbonate, t-amyl peroxy isopropyl monocarbonate, t-butyl peroxy-2-ethylhexyl carbonate, t-butyl peroxy allyl carbonate, t-butyl peroxy isopropyl carbonate, 1,1,3,3-tetramethylbutyl peroxy isopropyl monocarbonate, 1,1,2-trimethylpropyl peroxy isopropyl monocarbonate, 1,1,3,3-tetramethylbutyl peroxy isononanate, 1,1,2-trimethylpropyl peroxy-isononanate, and t-butyl peroxy benzoate.

Examples of the inorganic peroxide include, for example: persulfates such as sodium persulfate, potassium persulfate, and ammonium persulfate; hydrogen peroxide; potassium permanganate; bromates such as sodium bromate and potassium bromate; perborates such as sodium perborate, potassium perborate, and ammonium perborate; percarbonates such as sodium percarbonate, potassium percarbonate, and ammonium percarbonate; and superphosphates such as sodium superphosphate, potassium superphosphate, and ammonium superphosphate.

The polymerization initiator used can also be an azo compound. Examples of the azo compound include, for example, 2,2'-azobisisobutyronitrile, 2,2'-azobis(2-methylpropionamidine), and salts thereof.

The polymerization initiator is preferably inorganic peroxide, more preferably persulfate, yet more preferably ammonium persulfate.

The mixing ratio of the polymerization initiator relative to 100 parts by mass of the total amount of the monomer component is, for example, 0.01 parts by mass to 10 parts by mass, more preferably 0.05 parts by mass to 5 parts by mass.

Examples of the solvent include water, ketone-based solvents (e.g., acetone and methyl ethyl ketone), monohydric alcohols (e.g., methanol, ethanol, propanol, isopropanol, and butanol), glycol ether-based solvents (e.g., ethylene glycol monoethyl ether and propylene glycol monomethyl ether), and solvents which are miscible with water (e.g., ester ether-based solvents such as propylene glycol monomethyl ether acetate), and the solvent is preferably water. If the solvent used is tap water, a chelating agent (e.g., ethylenediaminetetraacetic acid) may be mixed at a predetermined ratio to remove metals. These solvents may be used alone or in combination of two or more. The mixing ratio of the solvent is not particularly limited, and is appropriately set according to the purpose and application.

In this method, in addition to the monomer component, the polymerization initiator, and the solvent, a chain transfer agent may further be mixed as needed.

Examples of the chain transfer agent include, for example: (meth)allyl compounds such as (meth)allyl sulfonate; mercaptans such as mercaptoethanol, thioglycolic acid, mercaptopropionic acid, thiosalicylic acid, thiolactic acid, aminoethanethiol, thioglycerol, and thiomalic acid; and isopropyl alcohol. These chain transfer agents may be used alone or in combination of two or more.

The term "(meth)allyl" as used herein is defined as allyl and/or methallyl.

Examples of the (meth)allyl sulfonate include, for example, sodium allylsulfonate, sodium methallylsulfonate, potassium allylsulfonate, and potassium allylsulfonate.

If the chain transfer agent is mixed, the mixing ratio of the chain transfer agent relative to the total amount (100 parts by mass) of the monomer component is preferably 0.001 parts by mass to 0.4 parts by mass, more preferably 0.008 parts by mass to 0.36 parts by mass, yet more preferably 0.008 parts by mass to 0.27 parts by mass.

The polymerization conditions in production of the poly(meth)acrylamide copolymer differ depending on the types of the monomer component, the polymerization initiator, the solvent, etc., and the polymerization temperature is, for example, from 30°C to 100°C inclusive, more preferably from 50°C to 95°C inclusive.

The polymerization time is, for example, from 0.5 hours to 24 hours inclusive, more preferably from 1 hour to 12 hours inclusive. The polymerization reaction may be terminated by adding a known polymerization terminator (e.g., sodium pyrosulfite, sodium thiosulfate, sodium sulfite, 4-methoxy phenol, and thiourea) as necessary.

The pH of the reaction solution in the polymerization is, for example, preferably from 1 to 6 inclusive, from 1.5 to 5 inclusive. The pH can be adjusted by adding known acids such as hydrochloric acid, sulfuric acid, and phosphoric acid or known alkalis such as sodium hydroxide, potassium hydroxide, and lithium hydroxide.

The pH of the reaction solution (i.e., the binder composition for lithium ion battery electrodes) containing a poly(meth)acrylamide copolymer obtained by the polymerization and water may be adjusted by treating the poly(meth) acrylamide copolymer with a neutralizer. Examples of the neutralizer include, for example: hydroxides of alkali metals, such as sodium hydroxide, potassium hydroxide, and lithium hydroxide; ammonia; and organic amine. The pH after the adjustment is preferably 2 to 11, more preferably 6 to 8.

By such a reaction, a poly(meth)acrylamide copolymer, which is a polymer of a monomer component including a (meth)acrylamide monomer and an unsaturated carboxylic acid-containing monomer as monomer units, is produced, and a binder composition for lithium ion battery electrodes, containing the poly(meth)acrylamide copolymer can be obtained.

The poly(meth)acrylamide copolymer has an intrinsic viscosity of 3.5 dL/g to 7.5 dL/g. This is because if the intrinsic viscosity is less than 3.5 dL/g, adhesion (adhesion strength) of the electrode mixture layer to the current collector may decrease. This is further because if the intrinsic viscosity is larger than 7.5 dL/g, action of aggregation of the poly(meth)acrylamide copolymer to the conductive auxiliary in the slurry composition becomes high, which may decrease coatability of the slurry composition.

In other words, in the binder composition for lithium ion battery electrodes according to the present invention, the poly(meth)acrylamide copolymer has an intrinsic viscosity of 3.5 dL/g to 7.5 dL/g, which makes it possible to provide a slurry composition for lithium ion battery electrodes, having excellent coatability and provide a lithium ion battery electrode having excellent adhesion of the electrode mixture layer to the current collector.

In view of improving the adhesion of the electrode mixture layer to the current collector and coatability of the slurry composition, the intrinsic viscosity of the poly(meth)acrylamide copolymer is more preferably from 4.2 dL/g to 6.5 dL/g inclusive.

The "intrinsic viscosity" as used herein is a characteristic value indicating the molecular weight of one polymer or the spreading of a molecular chain in a solution, refers to the volume of the polymer per unit area in the solution, and can be calculated by gel permeation chromatography (GPC) described in Examples below.

The weight average molecular weight (Mw) of the poly(meth)acrylamide copolymer is preferably from 2,000,000 to 4,000,000 inclusive. This is because of the following. It is presumed that if the weight average molecular weight is less than 2,000,000, the molecular size of the poly(meth)acrylamide copolymer becomes insufficient, the poly(meth)acrylamide copolymer does not act as steric hindrance, and the active material aggregates. Thus, a large amount of sedimentation occurs in the slurry composition, which may result in a decrease in sedimentation stability. If the weight average molecular weight is larger than 4,000,000, the adhesion of the electrode mixture layer to the current collector may decrease.

The weight average molecular weight of the poly(meth)acrylamide copolymer can be adjusted appropriately according to the types and mixing amounts of the (meth)acrylamide monomer, unsaturated carboxylic acid-containing monomer, and other polymerizable monomers, which are polymerization components, for example.

The "weight average molecular weight" as used herein refers to the weight average molecular weight obtained by gel permeation chromatography (GPC) and can be determined by the method described in Examples to be described later.

In the binder composition for lithium ion battery electrodes according to the present invention, the relationship in the following formula (1) is preferably satisfied where the intrinsic viscosity of the poly(meth)acrylamide copolymer is X [dL/g], and the weight average molecular weight of the poly(meth)acrylamide copolymer is Y [million].

[Mathematical 1]

$$1.35 \leq X/Y \leq 2.05 \ (1)$$

This is because if X/Y is 1.35 or more, the adhesion (adhesion strength) of the electrode mixture layer to the current collector further improves, and if X/Y is 2.05 or less, coatability of the slurry composition further improves.

The binder composition containing a poly(meth)acrylamide copolymer may further contain additives such as a dispersant, a leveling agent, an antioxidant, a thickener, an antiseptic (e.g., a slime control agent), a preservative, and an antifoaming agent.

If these additives are added, the content of the additives relative to 100 mass% of the total amount of the binder composition is preferably 5 mass% or less.

<Slurry Composition for Lithium Ion Battery Electrodes>

The slurry composition for lithium ion battery electrodes according to the present invention at least contains the binder composition for lithium ion battery electrodes and an electrode active material.

The electrode active material is not particularly limited as long as it can reversibly insert and release lithium ions by applying a potential in an electrolyte, and examples thereof include a negative electrode active material and a positive electrode active material. The electrode active materials may be used alone or in combination of two or more.

Examples of the negative electrode active material include, for example: carbon materials such as graphite, coke, acetylene black, and mesophase microbeads; lithium alloys such as a lithium metal, lithium-silicon, and lithium-tin; lithium titanate; silicon; and silicon oxide.

Examples of the positive electrode active material include, for example: oxides of transition metals such as Fe, Co, Ni, and Mn; composite oxides with lithium, and transition metal sulfides.

The content of the binder composition for lithium ion battery electrodes relative to 100 mass% of the total amount of solid content of the slurry composition for lithium ion battery electrodes is preferably 0.5 mass% to 10 mass%, more preferably 0.8 mass% to 5 mass%.

The slurry composition for lithium ion battery electrodes according to the present invention may further contain other known components such as a conductive auxiliary, a dispersant for a conductive auxiliary, a solvent for viscosity adjustment, a solvent for coatability adjustment, a thickener, a pH adjuster, a corrosion inhibitor in addition to the binder composition for lithium ion battery electrodes and the electrode active material.

If these other components are added, the content of the other components relative to 100 mass% of the total amount of the slurry composition for lithium ion battery electrodes is preferably 5 mass% or less.

Examples of the conductive auxiliary include, for example: carbon black such as acetylene black and ketjen black; conductive carbon such as vapor-grown carbon fibers and carbon nanotubes; fine powder of Cu, Ni, Al, and Si with an average particle diameter of 10 $\mu$m or less or alloys thereof.

If the conductive auxiliary is added, the content of the conductive auxiliary relative to 100 mass% of the total amount of solid content of the slurry composition for lithium ion battery electrodes is preferably 0 mass% to 5 mass%, more preferably 0.5 mass% to 2 mass%.

The slurry composition for lithium ion battery electrodes according to the present invention may further contain other binder compositions in addition to the binder composition for lithium ion battery electrodes containing the poly(meth) acrylamide copolymer, but the content of the poly(meth)acrylamide copolymer in all binders is preferably 50 mass% or more.

Examples of the other binder compositions include binder compositions containing fluorine-based resins (e.g., polyvinylidene fluoride and polytetrafluoroethylene), polyolefins (e.g., polyethylene and polypropylene), polymers having an unsaturated bond (e.g., styrene-butadiene rubber, isoprene rubber, and butadiene rubber), a carboxymethyl cellulose salt, a polyvinyl alcohol copolymer, polyvinylpyrrolidone, and the like. The other binder compositions may be used alone or in combination of two or more.

<Method for Producing Slurry Composition for Lithium Ion Battery Electrodes>

The slurry composition for lithium ion battery electrodes can be produced by, for example, charging a binder composition for a lithium ion battery electrode, an electrode active material, a conductive auxiliary, and other substances into a vessel and mixing them.

The mixing means for the slurry composition is not particularly limited, and examples thereof include, for example, a rotation-revolution mixer, a ball mill, a sand mill, a homogenizer, a planetary mixer, and a hobart mixer.

<Lithium Ion Battery Electrode>

The lithium ion battery electrode according to the present invention includes an electrode mixture layer made of the slurry composition for lithium ion battery electrodes on a current collector. The electrode mixture layer is obtained by applying the slurry composition for lithium ion battery electrodes to the current collector and drying the slurry composition.

The current collector is not particularly limited, and examples thereof include: metal materials such as copper, iron, aluminum, nickel, titanium, gold, tantalum, platinum, stainless steel, and nickel plated steel; and carbon materials such as carbon cloth and carbon paper. It is preferable to use a current collector made of copper as a current collector for a negative electrode, and a current collector made of aluminum as a current collector for a positive electrode.

The electrode mixture layer can be made by, for example, applying a prepared slurry composition for lithium ion battery electrodes to both surfaces or one surface of the current collector and drying the slurry composition at a predetermined temperature (e.g., 80°C) for a predetermined time (e.g., 60 minutes). In view of obtaining an electrode mixture layer having a desired density, a pressure treatment using a roll press is preferably performed.

Although not particularly limited, the thickness of the electrode mixture layer is preferably 5 $\mu$m to 300 $\mu$m, more preferably 10 $\mu$m to 250 $\mu$m. Within such a thickness range, a sufficient function of inserting and releasing lithium ions for a high-density current value can be easily obtained.

The form of the current collector is not particularly limited. In the case of the metal material, a metal foil, a metal cylinder, a metal coil, a metal plate, or the like is used, and in the case of the carbon material, a carbon plate, a carbon thin film, a carbon cylinder, or the like can be used.

Examples of the method for the application include methods using coating equipment such as a comma coater, gravure coater, microgravure coater, a die coater, a bar coater, and an applicator.

The temperature during the drying is preferably 60°C to 200°C, more preferably 75°C to 195°C. The atmosphere during the drying may be dry air or inert atmosphere.

<Lithium Ion Battery>

The lithium ion battery according to the present invention includes the lithium ion battery electrode (a positive electrode and a negative electrode), a separator, and an electrolyte.

The separator is not particularly limited as long as it can electrically insulate the positive electrode and the negative electrode from each other and can hold an electrolyte, and examples thereof include, for example, a single-layer or multilayer porous film and a nonwoven fabric made of polyolefin resins such as polyethylene and polypropylene, polyester resins such as polyethylene terephthalate, polyamide, and polyetherimide.

The electrolyte can be a non-aqueous electrolyte obtained by dissolving a supporting electrolyte in a non-aqueous solvent. Examples of the non-aqueous solvent include, for example: chain carbonate solvents such as diethyl carbonate, dimethyl carbonate, and ethyl methyl carbonate; cyclic carbonate solvents such as ethylene carbonate, propylene carbonate, and butylene carbonate; chain ether solvents such as 1,2-dimethoxy ethane; cyclic ether solvents such as tetrahydrofuran, 2-methyl tetrahydrofuran, sulfolane, and 1,3-dioxolane; chain ester solvents such as methyl formate, methyl acetate, and methyl propanoate; cyclic ester solvents such as $\gamma$-butyrolactone and $\gamma$-valerolactone; and acetonitrile. The electrolytes may be used alone or in combination of two or more, and is preferably combination of a solvent mixture containing cyclic carbonate and chain carbonate.

The supporting electrolyte used can be a lithium salt. Examples of the lithium salt include, for example, $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Among these, $LiPF_6$, $LiClO_4$, and $CF_3SO_3Li$ which are easily soluble in solvents and exhibit a high dissociation degree are preferable. Since the lithium ion conductivity increases as the supporting electrolyte having a higher dissociation degree is used, the lithium ion conductivity can be adjusted according to the kind of the supporting electrolyte. The supporting electrolytes may be used alone or in combination of two or more.

The form of the lithium ion battery is not particularly limited, and examples thereof include, for example: a cylinder type in which a sheet electrode and a separator are formed in a spiral shape; a cylinder type having an inside-out structure in which a pellet electrode and a separator are combined; and a coin type in which a pellet electrode and a separator are stacked on each other. Further, the battery of any of these forms can be used in any shape such as a coin shape, a cylindrical shape, or a square shape by being housed in any outer case.

The method for producing a lithium ion battery is not particularly limited, and may be assembled according to appropriate procedures depending on the structure of the battery. For example, a lithium ion battery can be produced by placing a negative electrode on an outer case, then placing an electrolyte and a separator thereon, further placing a positive electrode to face the negative electrode, and fixing them with a gasket and a sealing plate.

Examples

The present invention will be described below based on Examples. The present invention is not limited to the Examples, and the Examples can be modified and changed based on the spirit of the present invention, and these modifications and changes are not excluded from the scope of the present invention.

(Example 1)

<Method for Producing Binder Composition for Lithium Ion Battery Electrodes>

As some of polymerization components, 85 mol% of the total charge amount of the polymerization components (acrylamide, acrylic acid, and N,N-dimethylacrylamide) shown in Table 1 (including sodium methallylsulfonate shown in Table 1) was prepared, and diluted with distilled water so that the concentration of the polymerization components was 14 mass%.

The obtained solution was charged into a 500 mL separable flask, and then, ammonium persulfate (APS) as a polymerization initiator was added to the solution at 50°C to perform polymerization while nitrogen was blown into the solution. Then, the temperature was raised to 70°C by the temperature rise accompanying the polymerization, and the temperature was maintained. After 90 minutes from the addition of the ammonium persulfate, the rest of the polymerization components (15 mol%) and additional ammonium persulfate were added.

Next, the temperature was raised to 75°C to 80°C, and the temperature was maintained to continue the reaction for 120 minutes. Thereafter, sodium pyrosulfite ($Na_2S_2O_5$) as a polymerization terminator (reductant) and dilution water were added to cool the solution.

After cooling to 40°C, sodium hydroxide in an amount equal to that of the acrylic acid was added as a neutralizing alkali. Thus, a binder composition for lithium ion battery electrodes, containing a polyacrylamide copolymer and water was obtained.

<Calculation of Weight Average Molecular Weight and Intrinsic Viscosity>

Next, the weight average molecular weight (Mw) of the polyacrylamide copolymer in the obtained binder composition was calculated. More specifically, 0.1 g of the binder composition obtained in this example was collected and dissolved in 5.0 g of phosphate buffer with pH 7, and the resultant solution was adjusted so that the concentration of the non-volatile matter (solid content) contained in the binder composition become 1.0 g/L, and the weight average molecular weight (Mw) of the resultant sample was calculated from a chromatogram (chart) obtained by gel permeation chromatography (GPC). Table 1 shows the results.

Further, the intrinsic viscosity of the polyacrylamide copolymer in the obtained binder composition was calculated by a viscosity detector in a gel permeation chromatography (GPC) unit using the solution. Table 1 shows the results.

The viscosity detector measures a relative viscosity of the polymer solution with respect to the viscosity of the solvent, and this relative viscosity is expressed by a specific viscosity $\eta_{sp}$, which is the rate of increase in viscosity when the viscosity of the solution is $\eta$ and the viscosity of the solvent is $\eta_s$, and is defined by the following equation (2).
[Mathematical 2]

$$\eta_{sp} = (\eta - \eta_s)/\eta_s \quad (2)$$

The amount of increase in viscosity of the polymer per unit concentration c is expressed by a reduced viscosity $\eta_{red}$, and defined by the following equation (3).
[Mathematical 3]

$$\eta_{red} = \eta_{sp}/c \quad (3)$$

The intrinsic viscosity can be calculated experimentally by extrapolating the reduced viscosity $\eta_{red}$ in the following equation (4) so that the unit concentration c of the polymer becomes zero (that is, in the following equation (4), the value obtained when the unit concentration c is made as close to 0 as possible is defined as the intrinsic viscosity).
[Mathematical 4]

$$\text{Intrinsic Viscosity} = \lim_{c \to 0} \left( \frac{\eta_{sp}}{c} \right) \quad \cdots (4)$$

The measurement apparatus and measurement conditions used for calculating the weight average molecular weight and the intrinsic viscosity are shown below.
Apparatus: product name: OMNISECRESOLVE & REVEAL (manufactured by Malvern)
Column: product name: TSKgel GMPW$_{XL}$ (manufactured by Tosoh Corporation)
Mobile phase: phosphate buffer
Column flow rate: 0.8 mL/min
Sample concentration: 1.0 g/L

Injection volume: 100 μL

<Production of Slurry Composition for Lithium Ion Battery Electrodes>

96 parts by mass of graphite (manufactured by Shanghai Shanshan New Material Co., Ltd., trade name: FSNC-1) as an active material, 1 part by mass of carbon black (manufactured by IMERYS Graphite & Carbon Belgium, trade name: Super P Li) as a conductive auxiliary, and 3 parts by mass (solid content conversion) of the produced binder composition were charged into a vessel. The resultant slurry composition was diluted with distilled water to a solid concentration at which its viscosity was 5 Pa·s to 10 Pa·s (measured with a rheometer) and kneaded with a rotation-revolution mixer (rotation speed: 500 rpm, revolution speed: 1500 rpm, time: 5 min). Thus, a slurry composition for lithium ion battery electrodes was obtained.

<Evaluation of Sedimentation Stability of Slurry>

The produced slurry composition (about 20 g) was allowed to stand in the vessel, and the sedimentation stability of the slurry after 3 days and 7 days from the production was evaluated by tactile evaluation using a glass rod (diameter: 3 mm) according to the following evaluation criteria. Table 1 shows the results.
No slurry sedimentation was observed: ◎

Slurry was sedimented slightly but could be re-dispersed by stirring with the glass rod for 1 minute: ○

A large amount of slurry was sedimented, and the sediment was strongly aggregated at the bottom of the vessel, so that the slurry could not be stirred with the glass rod and could not be re-dispersed: ×

<Production of Lithium Ion Battery Electrode (Negative Electrode)>

The prepared slurry composition for lithium ion battery electrodes was applied to a copper foil (thickness: 18 μm), which was a current collector, by using an automatic coating apparatus (manufactured by TESTER SANGYO CO,. LTD., trade name: PI-1210) so that the application amount was 10 mg/cm$^2$, and dried in a dryer set at 80°C for 60 minutes. Thus, an electrode mixture layer was formed. Thereafter, the resultant electrode mixture layer was pressed by a roll press machine so that the density of the electrode mixture layer became 1.5 g/cm$^3$. Thus, a lithium ion battery electrode was obtained.
The ratio of the binder in the electrode mixture layer was 3 mass%.

<Evaluation of Coatability of Slurry>

The slurry composition was applied to the current collector and then dried to form an electrode mixture layer (before pressing), and the surface of the electrode mixture layer was visually observed to evaluate the coatability according to the following evaluation criteria. Table 1 shows the results.
No aggregation or coating unevenness was observed on the surface of the electrode mixture layer: ◎

Slight aggregate and coating unevenness were observed on the surface of the electrode mixture layer: ○

Many aggregates and much coating unevenness were observed on the electrode mixture layer: ×

<Evaluation of Interfacial Peeling Strength of Electrode>

First, a sample of 2.5 cm in width × 5.5 cm in length was cut out from the lithium ion battery electrode (negative electrode) produced above, and the active material surface of this sample and an aluminum plate were bonded together with a double-sided tape (manufactured by Nitto Denko Corporation, No. 510) to produce a test piece. Next, the stress at the time when the current collector (copper foil) was peeled off from one end of the test piece in a direction of 180° at a rate of 300 mm/min was measured using a tensile and compression universal tester (manufactured by INTESCO Co., Ltd., trade name: Model 205) under a condition of 25°C was measured. The measurement was performed twice, and an average value was calculated as an interfacial peeling strength of the electrode. The higher the interfacial peeling strength, the higher the adhesion strength between the current collector and the electrode mixture layer, which indicates that the electrode active material is difficult to be peeled off from the current collector.

As a reference sample, an electrode formed using a slurry composition obtained by using 1.5 parts by mass of styrene-butadiene rubber (SBR, manufactured by JSR, trade name: TRD 104A) in terms of solid content and 1.5 parts by mass of carboxymethyl cellulose (CMC, manufactured by DKS Co. Ltd., trade name: BSH-6) in terms of solid content instead of the binder composition of Example 1 was prepared. The interfacial peeling strength of the electrode was calculated in the same manner, and the ratio of the interfacial peeling strength of the present example to the interfacial peeling strength of the reference sample was calculated to evaluate the interfacial peeling strength according to the following evaluation criteria. Table 1 shows the results.

The interfacial peeling strength was twice or more the interfacial peeling strength of the reference sample: A
The interfacial peeling strength was 1.2 times or more the interfacial peeling strength of the reference sample: B
The interfacial peeling strength was 1 time or more and less than 1.2 times the interfacial peeling strength of the reference sample: C
The interfacial peeling strength was less than 1 time the interfacial peeling strength of the reference sample: D

(Examples 2 to 14 and Comparative Examples 1 to 5)

A binder composition for lithium ion battery electrodes, a slurry composition for lithium ion battery electrodes, and a lithium ion battery electrode (negative electrode) were produced in the same manner as in Example 1 except that the types and the mixing amounts of the polymerization components were changed to the conditions shown in Table 1.

Further, in the same manner as in Example 1, the weight average molecular weight and the intrinsic viscosity were calculated, and the sedimentation stability and coatability of the slurry and the interfacial peeling strength of the electrode were evaluated. Tables 1 to 3 show the results.

(Example 15)

A binder composition for lithium ion battery electrodes was produced in the same manner as in Example 1.

Then, 96 parts by mass of graphite (manufactured by Shanghai Shanshan New Material Co., Ltd., trade name: FSNC-1) as an active material, 1 part by mass of carbon black (manufactured by IMERYS Graphite & Carbon Belgium, trade name: Super P Li) as a conductive auxiliary, 2.1 parts by mass (solid content conversion) of the produced binder composition, and 0.9 parts by mass (solid content conversion) of styrene-butadiene rubber (SBR, manufactured by JSR, trade name: TRD104A) as another binder composition were charged into a vessel. The resultant slurry composition was diluted with distilled water to a solid concentration at which its viscosity was 5 Pa·s to 10 Pa·s (measured with a rheometer) and kneaded with a rotation-revolution mixer (rotation speed: 500 rpm, revolution speed: 1500 rpm, time: 5 min). Thus, a slurry composition for lithium ion battery electrodes was obtained.

The mass ratio between the produced binder composition (solid content) and styrene-butadiene rubber (SBR, solid content), which was another binder composition in the slurry composition for lithium ion battery electrodes was the produced binder composition : styrene-butadiene rubber (SBR) as another binder composition = 70 : 30.

In the same manner as in Example 1, a lithium ion battery electrode (negative electrode) was produced, the weight average molecular weight and the intrinsic viscosity were calculated, and the sedimentation stability and coatability of the slurry and the interfacial peeling strength of the electrode were evaluated. Table 2 shows the results.

(Example 16)

A binder composition for lithium ion battery electrodes was produced in the same manner as in Example 4.

Then, 67.2 parts by mass of graphite (manufactured by Shanghai Shanshan New Material Co., Ltd., trade name: FSNC-1) as an active material, 28.8 parts by mass of silicon oxide (SiO) (manufactured by OSAKA Titanium technologies, trade name: SiO for negative electrode (CC powder)) as an active material, 1 part by mass of carbon black (manufactured by IMERYS Graphite & Carbon Belgium, trade name: Super P Li) as a conductive auxiliary, and 3 parts by mass (solid content conversion) of the produced binder composition were charged into a vessel. The resultant slurry composition was diluted with distilled water to a solid concentration at which its viscosity was 5 Pa·s to 10 Pa·s (measured with a rheometer) and kneaded with a rotation-revolution mixer (rotation speed: 500 rpm, revolution speed: 1500 rpm, time: 5 min). Thus, a slurry composition for lithium ion battery electrodes was obtained.

The mass ratio between graphite and silicon oxide in the slurry composition for lithium ion battery electrodes was graphite : silicon oxide = 70 : 30.

In the same manner as in Example 1, a lithium ion battery electrode (negative electrode) was produced, the weight average molecular weight and the intrinsic viscosity were calculated, and the sedimentation stability and coatability of the slurry and the interfacial peeling strength of the electrode were evaluated. Table 2 shows the results.

(Examples 17 and 18)

A binder composition for lithium ion battery electrodes was produced in the same manner as in Example 4.

A slurry composition for lithium ion battery electrodes was produced in the same manner as in Example 16 except that the mass ratio (graphite : silicon oxide) between graphite and silicon oxide in the slurry composition for lithium ion battery electrodes was changed to the ratio shown in Table 2.

In the same manner as in Example 1, a lithium ion battery electrode (negative electrode) was produced, the weight average molecular weight and the intrinsic viscosity were calculated, and the sedimentation stability and coatability of the slurry and the interfacial peeling strength of the electrode were evaluated. Table 2 shows the results.

(Example 19)

A binder composition for lithium ion battery electrodes was produced in the same manner as in Example 4, and a trace amount (1000 ppm) of a slime control agent (manufactured by THOR JAPAN, trade name: ACTICIDELA 5008) as an additive was added to the produced binder composition for lithium ion battery electrodes.

In the same manner as in Example 1, a slurry composition for lithium ion battery electrode and a lithium ion battery electrode (negative electrode) were produced, the weight average molecular weight and the intrinsic viscosity were calculated, and the sedimentation stability and coatability of the slurry and the interfacial peeling strength of the electrode were evaluated. Table 2 shows the results.

(Comparative Example 6)

A slurry composition for lithium ion battery electrodes and a lithium ion battery electrode (negative electrode) were produced in the same manner as in Example 1 except that the types and mixing amounts of the polymerization components were changed to the conditions shown in Table 3, that a copolymer was obtained by the preparation method in accordance with Example 14 of International Patent Publication No. WO 2017/163806, and that a binder composition was then produced by using sodium hydroxide as a neutralizer.

Further, in the same manner as in Example 1, the weight average molecular weight and the intrinsic viscosity were calculated, and the sedimentation stability and coatability of the slurry and the interfacial peeling strength of the electrode were evaluated. Table 3 shows the results.

[Table 1]

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Mixing Ratio (mol%) | Acrylamide | 79.0 | 69.0 | 59.0 | 49.5 | 50.0 | 49.5 | 49.5 | 49.985 | 40.0 | 30.0 | 69.0 | 49.5 |
| | Acrylic Acid | 20.0 | 30.0 | 40.0 | 49.5 | 50.0 | 49.5 | 49.5 | 49.985 | 59.0 | 69.0 | 29.0 | 49.5 |
| | N,N-dimethylacrylamide | 1.0 | 1.0 | 1.0 | 1.0 | | | | | 1.0 | 1.0 | 2.0 | 1.0 |
| | N,N-diethylacrylamide | | | | | | 1.0 | | | | | | |
| | N-methylolacrylamide | | | | | | | 1.0 | | | | | |
| | Methylenebisacrylamide | | | | | | | | 0.030 | | | | |
| Mixing Amount (parts by mass) | Sodium Methallylsulfonate | 0.044 | 0.011 | 0.044 | 0.242 | 0.018 | 0.241 | 0.242 | 0.245 | 0.242 | 0.109 | 0.004 | 0.349 |
| Neutralizing Alkali | | NaOH | NaOH | NaOH | NaOH | NaOH | NaOH | NaOH | NaOH | NaOH | NaOH | NaOH | NaOH |
| Weight Average Molecular Weight [ten thousand] | | 311 | 312 | 360 | 260 | 274 | 267 | 258 | 270 | 307 | 280 | 345 | 298 |
| Intrinsic Viscosity [dL/g] | | 5.6 | 6.3 | 5.4 | 4.4 | 5.5 | 4.3 | 4.5 | 4.4 | 4.1 | 4.7 | 7.1 | 3.7 |
| Intrinsic viscosity X [dL/g] /Weight Average Molecular Weight Y [million] | | 1.80 | 2.02 | 1.50 | 1.69 | 2.01 | 1.61 | 1.74 | 1.63 | 1.34 | 1.68 | 2.06 | 1.24 |
| Mixing Amount [parts by mass] of Graphite in Slurry Composition | | 96 | 96 | 96 | 96 | 96 | 96 | 96 | 96 | 96 | 96 | 96 | 96 |
| Binder Ratio in Electrode [mass%] | | 3 | 3 | 3 | 3 | 3 | 3 | 3 | 3 | 3 | 3 | 3 | 3 |
| Evaluations | Slurry Sedimentation Stability (after 3 days) | ◎ | ◎ | ◎ | ◎ | ◎ | ◎ | ◎ | ◎ | ◎ | ○ | ◎ | ◎ |
| | Slurry Sedimentation Stability (after 7 days) | ◎ | ◎ | ◎ | ◎ | ◎ | ◎ | ◎ | ◎ | ◎ | ○ | ◎ | ◎ |
| | Slurry Coatability | ◎ | ◎ | ◎ | ◎ | ◎ | ◎ | ◎ | ◎ | ◎ | ◎ | ○ | ◎ |
| | Interfacial Peeling Strength of Electrode | B | A | A | A | A | A | A | A | B | B | A | B |

[Table 2]

| | | | Example 13 | Example 14 | Example 15 | Example 16 | Example 17 | Example 18 | Example 19 |
|---|---|---|---|---|---|---|---|---|---|
| Mixing Ratio (mol%) | | Acrylamide | 49.3 | 49.3 | 79.0 | 49.5 | 49.5 | 49.5 | 49.5 |
| | | Acrylic Acid | 49.3 | 49.3 | 20.0 | 49.5 | 49.5 | 49.5 | 49.5 |
| | | N,N-dimethylacrylamide | 1.4 | 1.4 | 1.0 | 1.0 | 1.0 | 1.0 | 1.0 |
| | | N,N-diethylacrylamide | | | | | | | |
| | | N-methylolacrylamide | | | | | | | |
| | | Methylenebisacrylamide | | | | | | | |
| Mixing Amount (parts by mass) | | Sodium Methallylsulfonate | 0.303 | 0.282 | 0.044 | 0.242 | 0.242 | 0.242 | 0.242 |
| Mixing Amount (ppm) | | Slime Control Agent | | | | | | | 1000 |
| Neutralizing Alkali | | | NaOH | NaOH | NaOH | NaOH | NaOH | NaOH | NaOH |
| Weight Average Molecular Weight [ten thousand] | | | 302 | 295 | 311 | 260 | 260 | 260 | 260 |
| Intrinsic Viscosity [dL/g] | | | 4.0 | 4.1 | 5.6 | 4.4 | 4.4 | 4.4 | 4.4 |
| Intrinsic viscosity X [dL/g] /Weight Average Molecular Weight Y [million] | | | 1.32 | 1.39 | 1.80 | 1.69 | 1.69 | 1.69 | 1.69 |
| Other Binder Composition | | | | | SBR | | | | |
| Binder Composition Containing Polyacrylamide Copolymer : Other Binder Composition | | | | | 70:30 | | | | |
| Mixing Amount [parts by mass] of Graphite in Slurry Composition | | | 96 | 96 | 96 | 67.2 | 48 | | 96 |
| Mixing Amount (parts by mass) of Silicon Oxide (SiO) in Slurry Composition | | | | | | 28.8 | 48 | 96 | |
| Graphite: Silicon Oxide (SiO) | | | | | | 70:30 | 50:50 | | |
| Binder Ratio in Electrode [mass%] | | | 3 | 3 | 3 | 3 | 3 | 3 | 3 |

EP 4 539 169 A1

14

(continued)

| Evaluations | | Example 13 | Example 14 | Example 15 | Example 16 | Example 17 | Example 18 | Example 19 |
|---|---|---|---|---|---|---|---|---|
| | Slurry Sedimentation Stability (after 3 days) | ◎ | ◎ | ◎ | ◎ | ◎ | ◎ | ◎ |
| | Slurry Sedimentation Stability (after 7 days) | ◎ | ◎ | ○ | ◎ | ◎ | ◎ | ◎ |
| | Slurry Coatability | ◎ | ◎ | ◎ | ◎ | ◎ | ◎ | ◎ |
| | Interfacial Peeling Strength of Electrode | B | A | B | A | A | A | A |

15

[Table 3]

| | | Comparative Example 1 | Comparative Example 2 | Comparative Example 3 | Comparative Example 4 | Comparative Example 5 | Comparative Example 6 |
|---|---|---|---|---|---|---|---|
| Mixing Ratio (mol%) | Acrylamide | 89.0 | 20.0 | 15.0 | 69.0 | 49.5 | 75.3 |
| | Acrylic Acid | 10.0 | 79.0 | 84.0 | 29.0 | 49.5 | 24.7 |
| | N,N-dimethylacrylamide | 1.0 | 1.0 | 1.0 | 2.0 | 1.0 | |
| | N,N-diethylacrylamide | | | | | | |
| | N-methylolacrylamide | | | | | | |
| | Methylenebisacrylamide | | | | | | |
| Mixing Amount (parts by mass) | Sodium Methallylsulfonate | 0.044 | 0.087 | 0.076 | | 0.436 | |
| Neutralizing Alkali | | NaOH | NaOH | NaOH | NaOH | NaOH | NaOH |
| Weight Average Molecular Weight [ten thousand] | | 296 | 250 | 263 | 339 | 316 | 280 |
| Intrinsic Viscosity [dL/g] | | 4.9 | 5.0 | 4.0 | 8.3 | 2.9 | 9.2 |
| Intrinsic viscosity X [dL/g] /Weight Average Molecular Weight Y [million] | | 1.66 | 2.00 | 1.52 | 2.45 | 0.92 | 3.29 |
| Mixing Amount [parts by mass] of Graphite in Slurry Composition | | 96 | 96 | 96 | 96 | 96 | 96 |
| Binder Ratio in Electrode [mass%] | | 3 | 3 | 3 | 3 | 3 | 3 |
| Evaluations | Slurry Sedimentation Stability (after 3 days) | ○ | ○ | × | ◎ | ◎ | ◎ |
| | Slurry Sedimentation Stability (after 7 days) | × | × | × | ◎ | ◎ | ○ |
| | Slurry Coatability | ◎ | ◎ | ○ | × | ◎ | × |
| | Interfacial Peeling Strength of Electrode | D | C | C | A | D | A |

As can be seen from Tables 1 and 2, the binder compositions for lithium ion battery electrodes according to Examples 1 to 19, each of which contains 30 mol% to 80 mol% acrylamide and 20 mol% to 70 mol% acrylic acid relative to 100 mol% of the total amount of the monomer component (acrylamide, acrylic acid, and other polymerizable monomers) and in each of which the polyacrylamide copolymer has an intrinsic viscosity of 3.5 dL/g to 7.5 dL/g can provide a slurry composition for lithium ion battery electrodes, having excellent sedimentation stability and coatability and a lithium ion battery electrode having excellent adhesion of the electrode mixture layer to the current collector.

In contract, as can be seen from Table 3, for Comparative Example 1 in which the content of acrylamide is higher than 80 mol% (i.e., 89 mol%) and the content of acrylic acid is less than 20 mol% (i.e., 10 mol%) relative to 100 mol% of the total amount of the monomer component, a larger amount of sedimentation occurs in the slurry, and the sedimentation stability is poor; moreover, the interfacial peeling strength of the electrode is small, and the adhesion (adhesion strength) of the electrode mixture layer to the current collector is poor.

Further, for Comparative Examples 2 and 3 in which the content of acrylamide is less than 30 mol% (i.e., 15 mol% to 20 mol%) and the content of acrylic acid is higher than 70 mol% (i.e., 79 mol% to 84 mol%) relative to 100 mol% of the total amount of the monomer component, a large amount of sedimentation occurs in the slurry, and the sedimentation stability is poor.

In Comparative Example 4 in which the polyacrylamide copolymer has an intrinsic viscosity of higher than 7.5 dL/g (i.e., 8.3 dL/g), coatability of the slurry composition for lithium ion battery electrodes is poor.

In Comparative Example 5 in which the polyacrylamide copolymer has an intrinsic viscosity of less than 3.5 dL/g (e.g., 2.9 dL/g), the interfacial peeling strength of the electrode is small, and the adhesion (adhesion strength) of the electrode mixture layer to the current collector is poor.

In Comparative Example 6 in which the polyacrylamide copolymer has an intrinsic viscosity of higher than 7.5 dL/g (i.e., 9.2 dL/g), coatability of the slurry composition for lithium ion battery electrodes is poor.

INDUSTRIAL APPLICABILITY

As can be seen from above, the present invention is suitable for a binder composition for lithium ion battery electrodes, used in a slurry composition for lithium ion battery electrodes.

**Claims**

1. A binder composition for a lithium ion battery electrode, the binder composition at least containing:

   a poly(meth)acrylamide copolymer that is a polymer of a monomer component including a (meth)acrylamide monomer and an unsaturated carboxylic acid-containing monomer as monomer units,
   the monomer component including 30 mol% to 80 mol% of the (meth)acrylamide monomer and 20 mol% to 70 mol% of the unsaturated carboxylic acid-containing monomer relative to 100 mol% of a total amount of the monomer component,
   the poly(meth)acrylamide copolymer having an intrinsic viscosity of 3.5 dL/g to 7.5 dL/g.

2. The binder composition of claim 1, wherein a weight average molecular weight of the poly(meth)acrylamide copolymer is from 2,000,000 to 4,000,000 inclusive.

3. The binder composition of claim 1, wherein a relationship in the following formula (1) is satisfied where the intrinsic viscosity of the poly(meth)acrylamide copolymer is X [dL/g] and the weight average molecular weight of the poly(meth)acrylamide copolymer is Y [million].
   [Mathematical 1]

$$1.35 \leq X/Y \leq 2.05 \ (1)$$

4. The binder composition of claim 1, wherein the monomer component includes 45 mol% to 75 mol% of the (meth)acrylamide monomer and 25 mol% to 55 mol% of the unsaturated carboxylic acid-containing monomer relative to 100 mol% of the total amount of the monomer component.

5. A slurry composition for a lithium ion battery electrode, comprising the binder composition of any one of claims 1 to 4 and an electrode active material.

6. A lithium ion battery electrode comprising: a current collector; and an electrode mixture layer made of the slurry composition of claim 5 on the current collector.

7. A lithium ion battery comprising the lithium ion battery electrode of claim 6.

## INTERNATIONAL SEARCH REPORT

| International application No. |
|---|
| **PCT/JP2023/026304** |

**A. CLASSIFICATION OF SUBJECT MATTER**

*H01M 4/62*(2006.01)i; *H01M 4/139*(2010.01)i
FI: H01M4/62 Z; H01M4/139

According to International Patent Classification (IPC) or to both national classification and IPC

**B. FIELDS SEARCHED**

Minimum documentation searched (classification system followed by classification symbols)

H01M4/62; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-57488 A (ARAKAWA CHEM. IND., CO., LTD.) 11 April 2019 (2019-04-11) claims, paragraph [0080], manufacturing example 3 | 1-7 |
| X | JP 2019-57487 A (ARAKAWA CHEM. IND., CO., LTD.) 11 April 2019 (2019-04-11) claims, paragraph [0073], manufacturing example 3 | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 539 169 A1

<table>
<tr><th colspan="2">INTERNATIONAL SEARCH REPORT<br>Information on patent family members</th><th colspan="2">International application No.<br><br>**PCT/JP2023/026304**</th></tr>
</table>

| Patent document cited in search report | Publication date (day/month/year) | Patent family member(s) | Publication date (day/month/year) |
|---|---|---|---|
| JP 2019-57488 A | 11 April 2019 | CN 108666499 A<br><br>KR 10-2018-0109740 A | |
| JP 2019-57487 A | 11 April 2019 | CN 108574101 A<br>KR 10-2018-0099561 A<br>KR 10-2020-0133699 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017163806 A